**Europäisches Patentamt**

**European Patent Office**

**Office européen des brevets**

(11) Veröffentlichungsnummer: **0 123 728**
**A1**

## EUROPÄISCHE PATENTANMELDUNG

(21) Anmeldenummer: **83112507.5**

(22) Anmeldetag: **13.12.83**

(51) Int. Cl.³: **H 02 P 7/28,** H 02 P 7/62

(30) Priorität: **31.03.83 DE 3311771**

(43) Veröffentlichungstag der Anmeldung: **07.11.84**
**Patentblatt 84/45**

(84) Benannte Vertragsstaaten: **AT BE CH DE FR GB IT LI LU NL SE**

(71) Anmelder: **Vorwerk & Co. Interholding GmbH, Mühlenweg 17-35, D-5600 Wuppertal 2 (DE)**

(72) Erfinder: **Aschoff, Hans-Joachim, Dr.-Ing., Hammesberger Weg 25, D-5600 Wuppertal 2 (DE)**
Erfinder: **Cholewa, Lothar, Bruchstrasse 155, D-4690 Herne 1 (DE)**

(54) **Überwachungsschaltung für Elektromotoren.**

(57) Es handelt sich um eine Überwachungsschaltung für unterschiedliche Betriebszustände eines Elektromotors, wobei an einem, in Reihe mit der Statorwicklung des Elektromotors liegenden Meßwiderstand, eine dem Motorstrom proportionale Spannung abgegriffen wird und diese einem Komparator zugeführt wird, dessen Sollwert sich entsprechend der drei Hauptzustände des Elektromotors, nämlich Anlauf, Normalbetrieb und Überlastung, automatisch im Bereich von Null bis zum Maximalwert ändert.

EP 0 123 728 A1

ACTORUM AG

Überwachungsschaltung für Elektromotoren

Die Erfindung betrifft eine Überwachungsschaltung für unterschiedliche Betriebszustände eines Elektromotors, wobei an einem, in Reihe mit der Statorwicklung des Elektromotors liegenden Meßwiderstand, eine dem Motorstrom proportionale Spannung abgegriffen wird.

Es existiert in der Praxis z.B. in einem Staubsauger eine Überwachungsschaltung, welche einen Elektromotor überwacht und bei Überlastung abschaltet. Hierbei wird der Elektromotor über einen sogenannten Thyristor betrieben. In den Thyristorkreis ist ein Widerstand eingefügt, an welchem eine dem Motorstrom proportionale Spannung abgegriffen wird. Diese Spannung wird über ein R - C - Glied einem Spannungsteilerpotentiometer zugeführt, welches mit der Basis eines Transistors verbunden ist. Dieser Transistor liegt parallel zum Thyristorkreis. Am Spannungsteilerpotentiometer kann nun die dem Motorstrom proportionale Spannung so eingestellt werden, daß im Normalbetrieb des Motors der Transistor noch nicht durchschaltet. Steigt nun der Motorstrom im Überlastungsfall, so steigt auch die Spannung an der Basis des Transistors. Dieser schaltet durch und der Thyristor sperrt. Der Motor bleibt stehen. Gleichzeitig wird ein weiterer Transistor durchgeschaltet, welcher über eine Rückkopplungsleitung zur Basis des ersten Transistors diesen im durchgeschalteten Zustand läßt. Die Schaltung geht somit in Selbsthaltung. Der Motor kann erst wieder eingeschaltet werden, wenn die Netzspannung abgeschaltet worden ist. Beim Anlauf des Motors, bei dem bekanntlich ein kurzseitig hoher Strom und somit eine hohe Spannung auftritt, soll das vorher erwähnte R - C - Glied den Transistor daran hindern, den Motor sofort wieder abzuschalten. Hierbei ist nun die Einstellung des Sollwertes durch das Spannungsteilerpotentiometers äußerst kritisch, da das R - C - Glied gleichzeitig auch im Anlauf eine gewisse Spannung am Spannungsteilerpotentiometer erzeugt. Der Schwellwert kann somit nicht jeden Wert einnehmen, da bei kleinen Schwellwerten, die in der Größe der Spannung am R - C - Glied beim Anlauf liegen, der Transistor den Motor trotzdem wieder abschalten würde. Der Schwellwert muß also in seiner Größe genügend über dem Spannungswert am R - C - Glied beim Anlauf liegen. Dies ist bei dieser Schaltung sehr nachteilig.

Aufgabe der Erfindung ist es nun, eine Überwachungsschaltung zu erstellen, bei der die Einstellung der einzelnen Schwellwerte für Anlauf und Abschaltung bei Überlast auf einfache Art und Weise durchgeführt werden kann.

Gelöst wird die Aufgabe durch die Merkmale des Anspruchs 1.

Eine Schaltungsanordnungsvariante zur Verwirklichung der Schaltung nach Anspruch 1 ist aus den Ansprüchen 2 bis 6 zu entnehmen.

Somit hat die Erfindung zum entscheidenden Vorteil, daß der Schwellwert zum Abschalten des Motors ohne Einflußnahme auf den Schwellwert für den Anlauf eingestellt werden kann und gleichzeitig eine Schwellwerteinstellung für den Anlaufstrom entfällt.

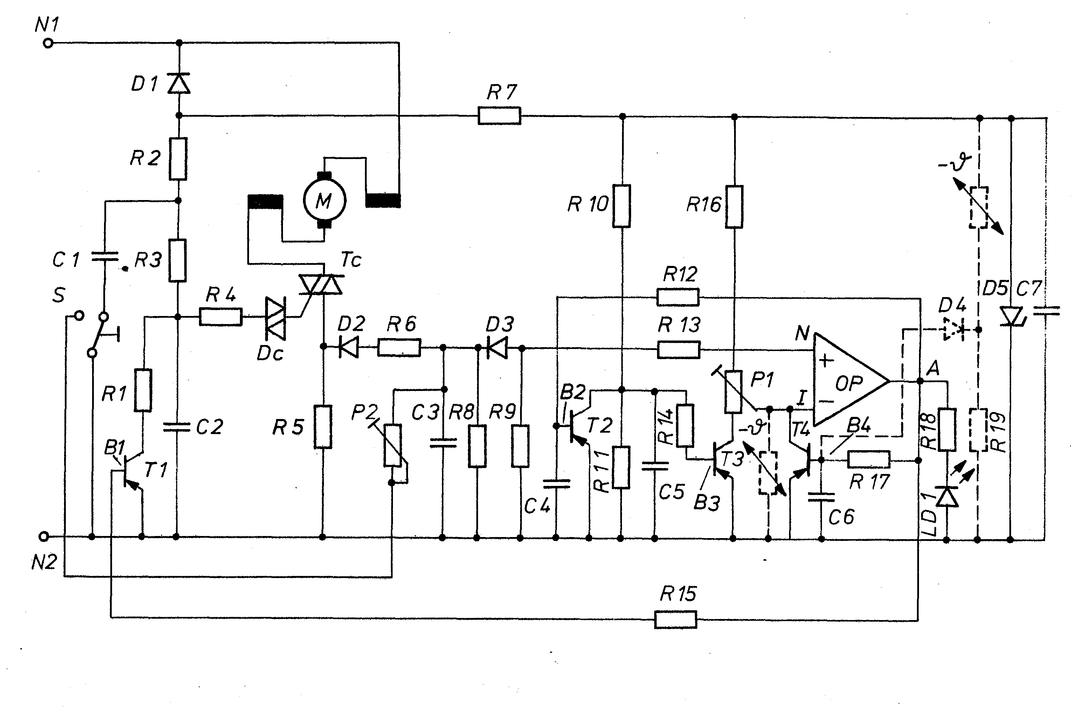

Nachstehend ist in der Figur ein Ausführungsbeispiel einer Schaltungsanordnung für eine Überwachungsschaltung nach der Erfindung dargestellt.

Ein Elektromotor M ist mit einem Triac TC und einem Widerstand R 5 in Reihe geschaltet. An dem Widerstand R 5 kann somit eine, dem Motorstrom proportionale Spannung abgegriffen werden.

Diese Spannung wird durch die Diode D 2 gleichgerichtet und anschließend in der R - C - Kombination R 6, C 3 integriert. Sie dient als Istwert des augenblicklichen Motorstroms und wird dann über eine sogenannte Entkopplungsdiode D 3 und den Widerstand R 13 dem nichtinvertierenden Eingang N eines Operationsverstärkers OP zugeführt, welcher als Komparator eingesetzt ist. Der für die Komparatorschaltung erforderliche Sollwert oder Vergleichswert, wird dem Operationsverstärker OP am invertierenden Eingang I zugeführt. Dieser Sollwert nimmt nun nach dem Erfindungsgedanken unterschiedliche Werte für die jeweiligen Betriebszustände an.

Beim Einschalten des Elektromotors M entsteht ein relativ hoher Einschalt oder Anlaufstrom, der die Vergleichsschaltung ansprechen lassen würde. Deshalb wird der Sollwert aus der über die Zenerdiode D 5 stabilisierten Versorgungsspannung erzeugt. Diese wird an einem Spannungsteiler aus den Widerständen R 16 und P 1 abgegriffen und dem invertierenden Eingang I des Operationsverstärkers OP zugeführt. Gleichzeitig liegt jedoch in Reihe mit R 16 und P 1 noch ein Transistor T 3. Dieser hat an seinem Basisanschluß B 3 ein R - C - Glied bestehend aus R 10, R 11 und C 5, welches bewirkt, daß sich beim Einschalten nur langsam ein negatives Potential am Basisanschluß B 3 des Transistors T 3 aufbaut. Das bedeutet, daß im Moment des Einschaltens der Transistor T 3 nicht leitend ist und somit die gesamte Versorgungsspannung am invertierenden Eingang I des Operationsverstärkers OP liegt. Dies ist der maximale Sollwert, der nicht vom Istwert überschritten werden kann. Somit führt eine kurzzeitige Erhöhung des Motorstroms beim Anlauf nicht zum Abschalten der Vergleicherschaltung. Wenn dann, abhängig von der Zeitkonstante des R - C - Gliedes R 10, R 11, C 5 das Potential am Basisanschluß B 3 des Transistors T 3 negativer wird, schaltet dieser durch, und am invertierenden Eingang I liegt die, durch den Spannungsteiler R 16 und P 1 eingestellte Sollwertspannung. Hier ist also eine automatische Änderung des Sollwertes von der Anlaufphase zur Betriebsphase vorhanden.

Nachdem nun der Transistor T 3 durchgeschaltet hat, liegt der für den normalen Betrieb erforderliche Sollwert an und die Schaltung überwacht jetzt den Elektromotor M auf Überlastung. Sobald der Istwert den Sollwert übersteigt, herrscht am Ausgang A des Operationsverstärkers OP negatives Potential. Dieses gelangt über den Widerstand R 15 an den Basisanschluß B 1 des Transistors T 1. Dadurch werden die Zündimpulse für den Diac DC soweit abgesenkt, daß dieser nicht mehr zündet, so daß der im Motorstromkreis angeordnete Triac TC gesperrt ist und der Elektromotor M keine Versorgungsspannung mehr erhält. Er bleibt stehen.

Gleichzeitig wird das Signal vom Ausgang A des Operationsverstärkers OP über den Widerstand R 17 an den Basisanschluß B 4 des Transistors T 4 gelegt, so daß dieser durchschaltet. Damit liegt der Sollwert auf Null Volt. Das bedeutet, daß hier die Schaltung in Selbsthaltung geht, da der Sollwert von Null Volt keinen Anlauf zuläßt.

Parallel dazu wird auch der Transistor T 2 durch das Ausgangssignal am Basisanschluß B 2 durchgeschaltet, so daß der Kondensator C 5, der für den Einschaltvorgang wichtig ist, entladen wird.

Zum Wiedereinschalten muß nun die in Selbsthaltung gegangene Schaltung erst vom Netz getrennt werden und kann dann wieder eingeschaltet werden.

Es ist noch die Diode D 3 zu erwähnen, welche verhindern soll, daß der Sollwert nicht über die hochohmigen Eingänge N und I auf den Integrationskondensator C 3 für die Istwerterfassung gelangt.

Zusätzlich besteht noch die Möglichkeit, entweder parallel zum Transistor T 4 oder an dessen Basisanschluß B 4 einen temperaturabhängigen Widerstand — 2ʰ anzuordnen, der, wenn er räumlich am Elektromotor M angebracht ist, dafür sorgt, daß bei Erwärmung des Elektromotors M die Schaltung ebenfalls anspricht. Diese beiden Schaltungsmöglichkeiten sind in unterbrochenen Linien eingezeichnet.

Es ist anhand der vorstehenden Beschreibung zu erkennen, daß der Sollwert für diese Schaltung entsprechend der verschiedenen Betriebszustände bzw. Istwerte sich in einer Art vorprogrammiertem Ablauf verändert, um die entsprechenden Überwachungs- bzw. Schaltfunktionen zu gewährleisten.

Vorwerk & Co. Interholding GmbH.

- 5 -

0123728

Patentansprüche

1. Überwachungsschaltung für unterschiedliche Betriebszustände eines Elektromotors, wobei an einem, in Reihe mit der Statorwicklung des Elektromotors liegenden Meßwiderstand eine dem Motorstrom proportionale Spannung abgegriffen wird, dadurch gekennzeichnet, daß nach dem Meßwiderstand ein Komparator angeordnet ist, dessen Sollwert sich entsprechend der drei Hauptzustände des Elektromotors M, nämlich Anlauf, Normalbetrieb und Überlastung, automatisch im Bereich von Null bis zum Maximalwert ändert.

2. Schaltungsanordnung für eine Überwachungsschaltung nach Anspruch 1, dadurch gekennzeichnet, daß der Komparator durch einen Operationsverstärker OP gebildet wird, an dessen invertierendem Eingang I, eine Reihenschaltung aus einem sogenannten Spannungsteiler R 16, P 1 und einem Transistor T 3, sowie ein weiterer Transistor T 4 angeordnet ist, wobei dessen Basisanschluß B 4 mit dem Ausgang A des Operationsverstärkers OP verbunden ist.

3. Schaltungsanordnung nach Anspruch 2, dadurch gekennzeichnet, daß am Basisanschluß B 3 des Transistors T 3 ein R - C - Glied R10, R11, C5 angeordnet ist, dessen Kondensator C5 von einem Transistor T 2 überbrückt ist, dessen Basisanschluß B2 ebenfalls mit dem Ausgang A des Operationsverstärkers OP verbunden ist.

4. Schaltungsanordnung nach Anspruch 2, dadurch gekennzeichnet, daß zwischen dem Meßwiderstand R5 und dem nicht - invertierenden Eingang N des Operationsverstärkers OP eine sogenannte Entkopplungsdiode D 3 angeordnet ist.

08.12.1983

5.

Schaltungsanordnung nach Anspruch 2, dadurch gekennzeichnet, daß zusätzlich am invertierenden Eingang I des Operationsverstärkers OP parallel zum Transistor T 4 ein temperaturabhängiger Widerstand — ϑ angeordnet ist.

6.

Schaltungsanordnung nach Anspruch 2 und Anspruch 5, dadurch gekennzeichnet, daß der temperaturabhängige Widerstand — ϑ als Bestandteil eines Spannungsteilers (R19/— ϑ ) über eine Diode D 4 am Basisanschluß B 4 des Transistors T 4 angeordnet ist.

0123728

ANR 1030434    Vorwerk & Co. Interholding GmbH

Europäisches
Patentamt

**EUROPÄISCHER RECHERCHENBERICHT**

0123728

Nummer der Anmeldung

EP 83 11 2507

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | ELEKTROTECHNIK, Band 65, Nr. 1/2, Januar 1983, Würzburg, BRD; "Blockierschutz für Universalmotoren", Seiten 56-57 * Seiten 56-57 * | 1,2 | H 02 P 7/28 H 02 P 7/62 |
| | --- | | |
| Y | ELEKTRONIK, Nr. 4, 1979, München, BRD; F. SCHMEISSER "Überstrom-Schutz und Drehzahleinstellung bei Permanentmagnet-Motoren in Haushaltsmaschinen", Seiten 69-73 * Seite 70, rechte Spalte, Absatz 2.2.1; Figur 4 * | 1,2 | |
| | ----- | | |

**RECHERCHIERTE SACHGEBIETE (Int. Cl. 3)**

H 02 H 7/08
H 02 H 7/085
H 02 P 7/00
H 02 P 7/28
H 02 P 7/62

Der vorliegende Recherchenbericht wurde für alle Patentansprüche erstellt.

| Recherchenort | Abschlußdatum der Recherche | Prüfer |
|---|---|---|
| BERLIN | 29-06-1984 | LEMMERICH J |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument